## Europäisches Patentamt

## European Patent Office

## Office européen des brevets

(11) Veröffentlichungsnummer: **0 285 948**

**A1**

# (12) EUROPÄISCHE PATENTANMELDUNG

(21) Anmeldenummer: 88104949.8

(22) Anmeldetag: 28.03.88

(51) Int. Cl.4: **C08G 18/10 , C08G 18/38 , C08G 18/46 , C08G 18/50 , C07C 85/20**

(30) Priorität: 10.04.87 DE 3712117

(43) Veröffentlichungstag der Anmeldung:
12.10.88 Patentblatt 88/41

(84) Benannte Vertragsstaaten:
AT BE CH DE ES FR GB IT LI NL SE

(71) Anmelder: **BAYER AG**
**Konzernverwaltung RP Patentabteilung**
**D-5090 Leverkusen 1 Bayerwerk(DE)**

(72) Erfinder: **Ruckes, Andreas, Dr.**
**Herderstrasse 13**
**D-5090 Leverkusen 3(DE)**
Erfinder: **Rasshofer, Werner, Dr.**
**Leopold-Gmelin-Strasse 31**
**D-5000 Köln 80(DE)**
Erfinder: **König, Klaus, Dr,**
**Zum Hahnenberg 40**
**D-5068 Odenthal(DE)**
Erfinder: **Kopp, Richard, Dr.**
**Bilharzstrasse 15**
**D-5000 Köln 80(DE)**

(54) **Verfahren zur Herstellung von Polyaminen und deren Verwendung zur Herstellung von Polyurethanen.**

(57) Die Erfindung betrifft ein Einstufenverfahren zur Herstellung von Polyaminen mit primären Aminogruppen, vorzugsweise aromatisch gebundenen Aminogruppen, durch Hydrolyse von endständige Isocyanatgruppen aufweisende Prepolymere mit einem NCO-Gehalt von 0,5 bis 40 Gew.-% mit 0,75 bis 40 Mol Wasser pro Äquivalent NCO-Gruppen in Gegenwart von sehr geringen Mengen an Natriumhydroxid in organischen, polaren Lösungsmitteln. Als Isocyanatgruppen aufweisende Verbindungen werden (bevorzugt Urethangruppen-haltige) NCO-Repolymere eingesetzt.

## Verfahren zur Herstellung von Polyaminen und deren Verwendung zur Herstellung von Polyurethanen

Die Erfindung betrifft ein Einstufenverfahren zur Herstellung von Polyaminen mit primären Aminogruppen, vorzugsweise aromatisch gebundenen Aminogruppen, durch Hydrolyse von endständige Isocyanatgruppen aufweisende Prepolymere mit einem NCO-Gehalt von 0,5 bis 40 Gew.-% mit 0,75 bis 40 Mol Wasser pro Äquivalent NCO-Gruppen in Gegenwart von sehr geringen Mengen an Natriumhydroxid in bestimmten organischen, polaren Lösungsmitteln. Als Isocyanatgruppen aufweisende Verbindungen werden (bevorzugt Urethangruppenhaltige) NCO-Prepolymere eingesetzt.

Die erfindungsgemäße Hydrolyse führt unter Kohlendioxidabspaltung direkt zu den Polyaminen, die nach üblichen Methoden isoliert werden können, wobei vorzugsweise auf die Abtrennung der geringen Katalysatormengen verzichtet werden kann.

Die Erfindung betrifft auch die Verwendung der erfindungsgemäßen Polyamine zur Herstellung von Polyurethan(harnstoff)en.

Es ist bekannt, daß Isocyanate durch saure oder basische Katalyse in Amine umgewandelt werden können, wie z.B. in N.V. Sidgwick, The Organic Chemistry of Nitrogen, Clarendon Press, Oxford, S. 326 (1966) sowie in J. March, Advanced Organic Chemistry: Reactions, Mechanismus and Structure, Mc Graw-Hill Book Co., New York, S. 658 (1968), belegt wird. Dabei gibt Sidgwick einen Hinweis auf die alkalische Hydrolysierbarkeit von NCO-Gruppen, der jedoch völlig unspezifisch und allgemein gehalten ist.

Hierfür wurden weiterhin Mehrstufenverfahren (DE-A-2 948 419, DE-AS 3 039 600, DE-OS 3 131 252) und Einstufenverfahren (DE-OS 3 233 400/EP-97 299, DE-OS 3 223 398/EP-97 298 und DE-OS 3 223 397/EP-97 290) vorgeschlagen. Nach den Einstufen-Hydrolyseverfahren werden (DE-OS 3 223 400) "Etherlösungsmittel" zusammen mit tertiären Aminen als Katalysatoren, (DE-OS 3 223 398) polare Lösungsmittel wie Dimethylformamid zusammen mit tertiären Aminen oder größeren Mengen an Alkalihydroxiden, Alkalisilikaten oder Alkalicyaniden als Katalysatoren, oder polare Lösungsmittel (DE-OS 3 223 397) mit Carbonaten oder Carboxylaten als Katalysatoren verwendet.

Die bekannten Verfahren zur Herstellung von Polyaminen sind alle mehr oder weniger aufwendig. Selbst bei den Einstufenverfahren sind noch weitere entscheidende Vereinfachungen wünschenswert, um die Polyaminen in wirtschaftlich noch günstigerer Weise, in noch besseren Konversionsraten NCO/NH$_2$ (d.h. höhere NH$_2$-Zahlen) und in noch glatterer Reaktion zu bekommen. Gegenüber herkömmlichen Verfahren sollten folgende vorteilhafte Verfahrensmerkmale erreicht werden, wie daß

keine Filtration nötig ist,

daß keine destillative Abtrennung eines tert.-Amin-Katalysators nötig ist,

daß man eine drastische Verringerung der notwendigen Katalysatormenge erreicht, so daß der Katalysator im Polyamin verbleiben kann.

Außerdem sollte erreicht werden, daß eine möglichst quantitative Umwandlung von NCO in NH$_2$-Gruppen (hohe Konversionsrate NCO/NH$_2$, d.h. möglichst hohe, dem theoretischen Wert nahekommende Aminzahl) erfolgt,

daß keine Nebenprodukte anfallen, die entsorgt werden müssen, und

daß eine einfache Aufarbeitung der Polyamine bzw. Hilfsstoffe möglich ist.

Völlig überraschend wurde gefunden, daß diese und weitere Vorteile dann erreicht werden können, wenn die einstufige Hydrolyse von Polyisocyanaten zu Polyaminen

unter Einhaltung bestimmter Wasser/NCO-Verhältnisse,

unter Verwendung von bestimmten, wasserlöslichen organischen Lösungsmitteln,

unter Verwendung minimaler Katalysatormengen und

unter Einhaltung homogener Reaktionsbedingungen

vorgenommen wird. Bei diesen Bedingungen ist es sogar möglich, die Hydrolyse bei niedrigen Temperaturen durchzuführen.

Ein erheblicher Vorteil des erfindungsgemäßen Verfahrens wird darin gesehen, daß bei der geringen Katalysatormenge kein Katalysator oder Umsetzungsprodukt des gebildeten CO$_2$ mit dem Katalysator NaOH (NaHCO$_3$ und NaCO$_3$), abfiltriert werden muß.

Da der einsetzbare Katalysator im Reaktionsmedium gut löslich ist, bestehen keine Verteilungsungleichgewichte wie bei der Verwendung von rasch sedimentierenden Alkalicarbonaten oder -Hydrogencarbonaten, wie diese entsprechend der DE-OS 3 223 297 vorliegen können.

Da er in Lösung bleibt, bzw. voll mischbar ist, muß er auch nicht abfiltriert werden. Der im Endprodukt verbleibende Katalysator stört im Regelfall wegen der sehr geringen Mengen, nicht. Da nach Aufarbeitung keine Salze oder Katalysatorreste entfernt werden müssen, ist diese Methode auch besonders für die Herstellung von hochviskosen oder festen Aminogruppen aufweisenden Verbindungen geeignet, aus denen bisher ungelöstes, restliches Salz oder anderes Katalysatormaterial nur sehr aufwendig entfernt werden konnte.

Außerdem ist das erfindungsgemäße Verfahren auch gut für die Hydrolyse von NCO-Prepolymeren auf Basis von Polyestern geeignet, da die - schonenden Reaktionsbedingungen kaum zu einer Spaltung der Estergruppen führen.

Gegenstand der Erfindung ist daher ein Einstufenverfahren zur Herstellung von vorzugsweise höher molekularen Polyaminen mit primären Aminogruppen durch Hydrolyse von NCO-Prepolymeren in Wasser enthaltenden organischen Lösungsmitteln unter Zusatz basischer Katalysatoren, das dadurch gekennzeichnet ist, daß man

a) NCO-Prepolymere mit einem NCO-Gehalt von 0,5 bis 40 Gew.-%, vorzugsweise 1,2 bis 25 Gew.-%, besonders bevorzugt 1,5 bis 10 Gew.-%, mit einem Monomerengehalt von höchstens 0,3 Gew.-%, bezogen auf eingesetztes Prepolymer,

b) mit 0,75 bis 40, bevorzugt 1,5 bis 10, Molen Wasser pro Äquivalent NCO der Komponente a),

c) in Gegenwart von 0,001 bis 0,02 Gew.-%, vorzugsweise 0,005 bis 0,02 Gew.-%, bezogen auf Komponente a) an Natriumhydroxid als basischen Katalysator,

d) und in Gegenwart von ≥ 10 Gew.-%, bezogen auf 100 Gew.-% der Komponente a), vorzugsweise 20 bis 2.000 Gew.-%, besonders bevorzugt 40 bis 1.000 Gew.-%, wassermischbarer polarer organischer Lösungsmittel mit Nitril-, Keton-, Sulfoxid-oder Ether-Gruppen und mit einem Siedebereich von 56 bis 250°C,

e) unter Aufrechterhaltung einer homogenen Reaktionsphase bei Temperaturen von 40 und 170°C, bevorzugt 50 bis 130°C, hydrolysiert.

Die Erfindung betrifft auch die nach den erfindungsgemäßen Verfahren erhaltenen Polyamine, vorzugsweise solche, die 0,46 bis 9,52 Gew.-% primäre, vorzugsweise aromatisch gebundene $NH_2$-Gruppen aufweisen.

Ein weiterer Gegenstand der Erfindung sind auch Verfahren zur Herstellung von gegebenenfalls zellförmigen Polyurethan(harnstoff)en durch Umsetzung der erfindungsgemäß erhaltenen Polyamine, mit
Polyisocyanaten, gegebenenfalls
weiteren Verbindungen mit gegenüber Isocyanatengruppen reaktiven Gruppen, gegebenenfalls
in Anwesenheit an sich bekannter Hilfs-und Zusatzstoffe und/oder Lösungsmittel.

Die im erfindungsgemäßen Verfahren einzusetzenden NCO-Verbindungen a) sind NCO-Prepolymere, wie sie in an sich bekannter Weise durch Umsetzung von niedermolekularen und/oder höhermolekularen Hydroxy-und/oder Amino-und/oder Thiolgruppen als reaktive Gruppen enthaltenden Verbindungen (Molekulargewicht 62 bis ca. 12000) mit einem Überschuß an Polyisocyanaten entstehen.

Als Polyisocyanate zur Herstellung der freie NCO-Gruppen aufweisenden Verbindungen kommen im Prinzip beliebige, aromatische und heterocyclische Di-und Polyisocyanate in Frage, wie sie z.B. von W. Siefken in Justus Liebigs Annalen der Chemie, 562, S. 75-136, (1949), beschrieben werden, oder wie sie, zusammen mit für diese Umsetzungen geeigneten niedermolekularen und/oder höhermolekularen Hydroxy-und/oder Amino-und/oder Thiolgruppen als reaktive Gruppen enthaltende Verbindungen des MG-Bereichs 32 und 60-12000, auf S. 15-25 der DE OS 3 223 400 aufgeführt sind, bzw. im Stand der Technik bekannt sind.

Für das erfindungsgemäße Verfahren werden NCO-Prepolymere bevorzugt, die aus höhermolekularen Polyolen (Molmasse 400-12000), vorzugsweise Polyetherpolyole, gegebenenfalls unter Mitverwendung von bekannten Kettenverlängerungsmittel Art (Molmasse 62-399), durch Umsetzung mit aromatischen Diisocyanaten im Äquivalentverhältnis von 1:1,5 bis 1:2,8, insbesondere ca. 1:1,5 bis 1:2, erhalten worden sind.

Der NCO-Gehalt der eingesetzten (vorzugsweise urethangruppenhaltige) NCO-Prepolymere sollte 0,5 % bis 40 Gew.-%, bevorzugt 1,2 bis 25 Gew.-%, insbesondere aber 1,5 bis 10 Gew.-% bei Funktionalitäten von 2 bis 8, bevorzugt 2 bis 4 und insbesondere 2 bis 3 betragen.

In der Regel enthalten solche NCO-Prepolymeren, bedingt durch das Herstellverfahren, einen Anteil (≥1 Gew.-%) monomerer, niedermolekulare Polyisocyanate. Für das erfindungsgemäße Verfahren werden jedoch nur NCO-Prepolymere verwendet, deren Gehalt an monomeren, niedermolekularen Polyisocyanaten höchstens 0,3 Gew.-%, bezogen auf das Prepolymer, beträgt. Eine Möglichkeit besteht z.B. darin, in den entsprechenden NCO-Prepolymeren den Gehalt an monomeren, niedermolekularen Polyisocyanaten (z.B. TDI), z.B. mit Hilfe eines sogenannten Dünnschichtverdampfers, durch Abdestillieren zu senken. Eine andere Möglichkeit wäre, bei der Herstellung des Prepolymeren mit einem Unterschuß Isocyanat, bezogen auf "ideales" NCO-Preploymer (NCO/OH-Verhältnis 2:1), zu arbeiten. Schließlich kann man wie in der DE-OS 3 223 397 vorgeschlagen, unter Mitverwendung einer "H-aktiven" Verbindung bei der Herstellung der NCO-Preploymeren den Gehalt an monomeren, niedermolekularen Polyisocyanaten senken.

Als Komponente b) wird Wasser, bevorzugt in flüssiger Form, eingesetzt.

Bezogen auf 1 Äquivalent NCO werden ≥0,75 Mol, bevorzugt ≥0,75-40 Mol, besonders bevorzugt 1,5-10 Mol Wasser, verwendet.

Als Katalysatoren c) wird NaOH eingesetzt.

Als Lösungsmittel-Komponente d) werden wassermischbare, polare organische Lösungsmittel mit Nitril-, Keton-, Sulfoxid-oder Ether-Gruppen mit einem Siedebereich von 56 bis 250°C, vorzugsweise aliphatische Nitrile mit $C_2-C_{10}$, aliphatische Ketone mit $C_2-C_{10}$ und/oder aliphatische Sulfoxide mit $C_2-C_{10}$ oder Dioxan eingesetzt.

Besonders bevorzugt werden Acetonitril, Aceton, Methylisopropylketon und/oder Dimethylsulfoxid eingesetzt. Die Lösungsmittel können auch in beliebigen Mischungsverhältnissen zueinander eingesetzt werden.

Für die Mengen (insbesondere die Obergrenzen) an einzusetzenden Lösungsmitteln d) gelten folgende Randbedingungen des Verfahrens:

1. Pro 100 Gew.-% NCO-Verbindung a) sollen in der Hydrolyse-Reaktionsmischung 20 bis 2000, bevorzugt 40 bis 1000 Gew.-% d) verwendet werden.

2. Es muß soviel Wasser b) und gegebenenfalls Lösungsmittel d) verwendet werden, daß eine im wesentlichen homogene (höchstens schwach trübe) oder vorzugsweise eine homogene, klare Lösung mit der NCO-Verbindung bei den Reaktionstemperaturen gebildet wird; besonders bevorzugt wird soviel Wasser zugegeben, daß eine bei allen Verfahrenstemperaturen einphasige Mischung entsteht, jedoch immer unter Einhaltung des genannten Verhältnisses von Wasser:NCO-Komponente a).

Die katalytisch wirkende Verbindung wird im allgemeinen den Lösungsmitteln und Wasser zugesetzt. Die Zugabe zur Isocyanatgruppen-haltigen Verbindung ist u.U. möglich, aber nicht bevorzugt.

Zur Hydrolyse der NCO-Verbindung zu Polyaminen mit hinreichend hoher Aminzahl (hoher Konversionsrate) ist es günstig, eine Konzentration der NCO-Verbindung von ≤75, vorzugsweise ≤55 Gew.-% in der Reaktionsmischung aufrechtzuerhalten.

Die erfindungsgemäße Reaktion wird bevorzugt in homogener Phase durchgeführt. Durch ein geringfügiges Überdosieren der Wassermenge oder der Menge der NCO-Verbindung kann gegebenenfalls vorübergehend eine leichte Trübung der Reaktionsmischung erhalten werden, da die Ausgangsstoffe nicht mehr vollständig gelöst sind.

Eine durch übermäßige Wasserzugabe unter Ausfällung des NCO-Prepolymers erhaltene Mehrphasigkeit ergibt jedoch unzureichende Produkte. Andererseits muß jedoch genügend Wasser vorhanden sein, um die eingesetzte Katalysatormenge homogen zu lösen.

Wie bereits ausgeführt, kann die Reaktion bei Temperaturen von 40 bis 170°C durchgeführt werden. Bevorzugt wird jedoch bei Temperaturen von 50 bis 130°C gearbeitet, da hierbei die besten Raum/Zeit-Ausbeuten bei gleichzeitig hoher Löslichkeit und überraschenderweise geringster Harnstoff-Verlängerung erreicht werden. Unter besonderen Umständen kann es auch notwendig werden, die Reaktion unter Druck durchzuführen, um die erforderlichen Temperaturen erreichen zu können. Zusätzlich sollte jedoch beachtet werden, daß je weniger polar und/oder wasserlöslich das jeweils eingesetzte Lösungsmittel ist, desto größer muß die Verdünnung und/oder Katalysatormenge und/oder Temperatur (gegebenenfalls durch erhöhten Druck erreichbar) gewählt werden, um hohe $NCO/NH_2$-Konversionsraten zu erreichen. Bei Erhöhung der Katalysatormenge muß gegebenenfalls auch die Wassermenge erhöht werden, um eine vollständige Lösung des Katalysators im Reaktionsgemisch zu gewährleisten.

Durch einige wenige Vorversuche lassen sich die von den Ausgangsverbindungen abhängigen optimalen Mischungsverhältnisse zur Erreichung homogener Mischungen unter Beachtung der Verhältnisse zwischen a), b), c) und d) ermitteln.

Das Einsetzen der Reaktion ist durch die fast spontane Abspaltung von $CO_2$ zu erkennen, die auch bereits bei niedrigen Temperaturen, z.B. 10°C, beobachtbar ist. Es ist jedoch erbeblich günstiger, erfindungsgemäß bei den angegebenen höheren Temperaturen zu arbeiten, um die Harnstoffbildung zurückzudrängen. Wichtig ist, daß für eine sehr gute und schnelle Durchmischung unter homogener Lösung der Reaktanten gesorgt wird, was im wesentlichen durch die Verwendung der Lösungsmittel sichergestellt werden muß. In gleicher Richtung wirkt auch die Viskositätsverminderung bei Anwendung der höheren Reaktionstemperaturbereiche. Die Reaktion kann diskontinuierlich oder kontinuierlich durchgeführt werden.

Zur kontinuierlichen oder diskontinuierlichen Ausführungsform gilt das in DE OS 3 223 397, S. 32, Z. 20 bis S. 35, Z. 10 Offenbarte.

Auch die Aufarbeitung kann kontinuierlich oder diskontinuierlich erfolgen. Die Aufarbeitung des Reaktionsgemisches geschieht nach bekannten Methoden, wie extraktiv, über Phasentrennung oder destillativ.

Bevorzugt erfolgt die Aufarbeitung des Reaktionsgemisches ohne Phasentrennung so, daß nach Beendigung der Reaktion (keine $CO_2$-Entwicklung mehr zu beobachten) das Lösungsmittel bzw. Lösungsmittel/Wasser-Gemisch, bevorzugt unter Anwendung von Vakuum, z.B. 1 - 700 Torr, abdestilliert wird, wobei zur Entfernung flüchtiger Reste noch höheres Vakuum, z.B. 0,001 - 1 Torr, angelegt werden kann. Ein Temperaturbereich von anfangs ca. 60 -100°C, später 80 -100°C, hat sich hierbei bewährt. Das abdestillierte Lösungsmittel kann, gegebenenfalls mehrmals, wiederverwendet werden.

Die nach der Aufarbeitung erfindungsgemäß erhaltenen Polyamine stellen im allgemeinen farblose bis schwach gefärbte, mittelviskose bis hochviskose und gegebenenfalls höherschmelzende Produkte mit den bereits angegebenen Aminogruppengehalten dar. Diese Polyamine weisen entsprechend ihren Ausgangsstoffen ferner Urethan- und/oder Harnstoff-und/oder Uretdion-und/oder Isocyanurat-und/ oder Biuretgruppen und/oder Uretonimingruppen, sowie gegebenenfalls Ether- und/oder Acetal-und/oder Carbonat-und/oder Ester- und/oder Thioether und/oder Dialkylsiloxangruppen und/oder die Reste von Polybutadienen auf, wie sie bereits in den NCO-Verbindungen vorgelegen haben. Durch Nebenreaktionen können jedoch auch zusätzliche Bindungen enstehen, z.B. Harnstoffgruppen aus bereits verseiften Anteilen und noch verbliebenen NCO-Gruppen während der Hydrolyseraktion. Die Menge der in den Polyaminen enthaltenen primären aromatischen Aminogruppen entspricht maximal der Menge der NCO-Gruppen in den NCO-Verbindungen, also etwa 0,19 bis 15,23 Gew.-% $NH_2$ (bei 0,5 bis 40 Gew.-% NCO), bevorzugt 0,46 bis 9,52 Gew.-% $NH_2$ (bei 1,2 bis 25 Gew.-% NCO) und besonders bevorzugt 0,58 bis 3,81 Gew.-% $NH_2$ (bei 1,5 bis 10 Gew.-% NCO).

Die erfindungsgemäß erhaltenen, bevorzugt aromatischen Polyamine werden wegen ihres niedrigen Dampfdruckes vorzugsweise als Reaktionspartner für gegebenenfalls blockierte Polyisocyanate bei der Herstellung von Polyurethanen (Polyurethanharnstoffen), gegebenenfalls zellhaltigen Polyurethankunststoffen oder Polyurethanschaumstoffen eingesetzt, wobei sie gegebenenfalls auch mit anderen niedermolekularen (Molekulargewicht 32 bis 399) und/oder höhermolekularen (Molekulargewicht 400 bis ca. 12 000) Verbindungen mit gegenüber Isocyanaten reaktiven Gruppen kombiniert werden können. Geeignete Ausgangskomponenten für die an sich bekannte Herstellung von Polyurethankunststoffen werden oben im Zusammenhang mit der Prepolymerherstellung bzw. auch in DE-A 2 302 564, DE-A 2 432 764 US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendende Hilfs-und Zusatzstoffe.

Verfahren zur Herstellung von Polyurethan- (harnstoff)en unter Einsatz der erfindungsgemäß erhaltenen Polyamine ist ebenfalls Gegenstand der vorliegenden Erfindung: Es können so z.B. Elastomere, Beschichtungen, Fäden in der Applikation aus Schmelzen, Lösungen, Dispersionen oder Reaktivkomponentenmischungen hergestellt werden.

Weitere Verwendungszwecke der erfindungsgemäß hergestellten Polyamine sind z.B. Kupplungskomponenten für Diazofarbstoffe, Härter für Epoxid-und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

Beispiel 1

In diesem Beispiel wird ein gedünnschichtetes Prepolymer mit einem NCO-Gehalt von 3,6 % verwendet, hergestellt durch 3-stündiges Rühren eines Gemisches aus einem Polyethergemisch (2:1- Gemisch: Trimethylolpropan, $H_2O$ ← Propylengemisch und Glycerin ← Propylenoxid ← Ethylenoxid) der Misch-OH-Zahl 50.1 und Toluylen- 2,4-diisocyanat im Äquivalentverhältnis NCO:OH = 2:1 bei 80°C. Der Gehalt an monomeren T100 beträgt 0,23 %.

Vorgelegt wird ein Gemisch aus 1500 g Acetonitril, 25 g Wasser (Acetonitril/Wasser-Verhältnis = 60:1; 3,24 Mol Wasser pro NCO-Äquivalent) und 0,075 g NaOH (0,015 Gew.-%, bezogen auf NCO-Prepolymer) und bis zum Rückfluß erhitzt. Innerhalb von 15 Minuten werden 500 g des oben beschriebenen Prepolymer zugegeben.

Nach Beendigung der Zugabe wird noch 5 Minuten nachgerührt (rasch abklingende $CO_2$-Entwicklung) und dann durch Anlegen von Vakuum (zuerst 19,5 mbar, dann 0,13 mbar bei 80 bis 100°C) Acetonitril und Wasser abdestilliert. NH-Zahl ($HClO_4$): 43,36 mg KOH/g

Beispiel 2

Vorgelegt wird ein Gemisch aus 1000 g Acetonitril, 40 g Wasser (Acetonitril/Wasser-Verhältnis = 25:1; 5,1 Mol Wasser pro NCO-Äquivalent) und 0,05 g NaOH (0,01 Gew.-%, bezogen auf NCO-Prepolymer) und bis zum Rückfluß erhitzt. Innerhalb von 15 Minuten werden 500 g des Pre polymeren aus Beispiel 1 mit 3,6 % NCO zugegeben. Die Aufarbeitung erfolgt wie in Beispiel 1. NH-Zahl ($HClO_4$): 40,31 mg KOH/g

Beispiel 3

Vorgelegt wird ein Gemisch aus 1500 g Acetonitril, 40 g Wasser (Acetonitril/Wasser-Verhältnis = 37,5:1; 5,1 Mol Wasser pro NCO-Äquivalent) und 0,075 g NaOH (0,015 Gew.-%, bezogen auf NCO-Prepolymer) und bis zum Rückfluß erhitzt. Innerhalb von 15 Minuten werden 500 g des Prepolymeren aus Beispiel 1 mit 3,6 % NCO zugegeben. Die Aufarbeitung erfolgt wie in Beispiel 1. NH-Zahl (HC10₄): 43,22 mg KOH/g

Beispiel 4

Vorgelegt wird ein Gemisch aus 1370 g Acetonitril, 25 g Wasser (Acetonitril/Wasser-Verhältnis = 54,8:1; 3,24 Mol Wasser pro NCO-Äquivalent) und 0,1 g NaOH (0,02 Gew.-%, bezogen auf NCO-Prepolymer) und bis zum Rückfluß erhitzt. Innerhalb von 15 Minuten werden 500 g des Prepolymeren aus Beispiel 1 mit 3,6 % NCO zugegeben. Die Aufarbeitung erfolgt wie in Beispiel 1. NH-Zahl (HC10₄): 42,8 mg KOH/g

Ansprüche

1. Einstufenverfahren zur Herstellung von vorzugsweise höhermolekularen Polyaminen mit primären Aminogruppen durch Hydrolyse von NCO-Prepolymeren in Wasser enthaltenden Lösungsmitteln unter Zusatz basischer Katalysatoren, das dadurch gekennzeichnet ist, daß man
a) NCO-Prepolymere mit einem NCO-Gehalt von 0,5 bis 40 Gew.-%, vorzugsweise 1,2 bis 25 Gew.-%, besonders bevorzugt 1,5 bis 10 Gew.-%, mit einem Monomerengehalt von höchstens 0,3 Gew.-%, bezogen auf eingesetztes Prepolymer,
b) mit 0,75 bis 40, bevorzugt 1,5 bis 10, Molen Wasser pro Äquivalent NCO der Komponente a),
c) in Gegenwart von 0,001 bis 0,02 Gew.-%, vorzugsweise 0,005 bis 0,02 Gew.-%, bezogen auf Komponente a) an Natriumhydroxid als basischen Katalysator,
d) und in Gegenwart von ≧ 10 Gew.-%, bezogen auf 100 Gew.-% der Komponente a), vorzugsweise 20 bis 2.000 Gew.-%, besonders bevorzugt 40 bis 1.000 Gew.-%, wassermischbarer polarer organischer Lösungsmittel mit Nitril-, Keton-, Sulfoxid- oder Ether-Gruppen und mit einem Siedebereich von 56 bis 250°C,
e) unter Aufrechterhaltung einer homogenen Reaktionsphase
bei Temperaturen von 40 und 170°C, bevorzugt 50 bis 130°C, hydrolysiert.

2. Verfahren nach Anspruch 1, dadurch gekennzeichnet, daß man die Komponente b, in Mengen von 1,5 bis 10 Mol einsetzt.

3. Verfahren nach einem der Ansprüche 1 oder 2, dadurch gekennzeichnet, daß man das Natriumhydroxid in Mengen von 0,005 bis 0,02 Gew.-% einsetzt.

4. Verfahren nach einem der Ansprüche 1 bis 3, dadurch gekennzeichnet, daß man die Komponente d) in Mengen von 40 bis 1000 Gew.-% einsetzt.

5. Verfahren nach einem der Ansprüche 1 bis 4, dadurch gekennzeichnet, daß man als Komponente d, Aceton, Acetonitril, Methylisopropylketon und/oder Dimethylsulfoxid verwendet.

6. Polyamine die 0,46 bis 9,52 Gew.-% primäre, vorzugsweise aromatisch gebundene NH₂-Gruppen erhalten nach einem der Anpsrüche 1 bis 5.

7. Verfahren zur Herstellung von gegebenenfalls zellförmigen Polyurethan(harnstoff)en durch Umsetzung der Polyamine erhalten nach einem der Ansprüche 1 bis 5, mit Polyisocyanaten, gegebenenfalls weiteren Verbindungen mit gegenüber Isocyanatgruppen reaktiven Gruppen, gegebenenfalls in Anwesenheit an sich bekannter Hilfs-und Zusatzstoffe und/oder Lösungsmittel.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | EP-A-0 219 035  (BAYER)<br>* Vergleichsbeispiele 4-6 *<br>--- | 1-7 | C 08 G  18/10<br>C 08 G  18/38<br>C 08 G  18/46<br>C 08 G  18/50<br>C 07 C  85/20 |
| D,X | EP-A-0 097 298  (BAYER)<br>* Beispiel 4h; Ansprüche 1,5,9,10 *<br>--- | 1-7 | |
| D,A | EP-A-0 097 290  (BAYER)<br>* Ansprüche 1,5 *<br>--- | 1-7 | |
| D,A | EP-A-0 097 299  (BAYER)<br>* Beispiel 1; Seite 28; Zeilen 7-15 *<br>----- | 1-7 | |

RECHERCHIERTE
SACHGEBIETE (Int. Cl.4)

C 08 G  18/00
C 07 C  85/00

Der vorliegende Recherchenbericht wurde für alle Patentansprüche erstellt

| Recherchenort | Abschlußdatum der Recherche | Prüfer |
|---|---|---|
| BERLIN | 30-05-1988 | KRAIL |